# EUROPÄISCHE PATENTSCHRIFT

(11) **EP 1 992 842 B1**
(45) Veröffentlichungstag und Bekanntmachung des Hinweises auf die Patenterteilung: **01.09.2010**
(21) Anmeldenummer: 08006921.4
(22) Anmeldetag: 07.04.2008
(51) Int. Cl.: B60N 2/06, F16H 1/16, F16H 57/02

(54) **Getriebe für eine Verstelleinrichtung, insbesondere eine Kfz-Verstelleinrichtung, mit Spielausgleich**
Transmission system for an adjustment system, in particular a motor vehicle adjustment system with compensation for play
Engrenage pour un dispositif de réglage, en particulier un dispositif de réglage de véhicule automobile doté d'un équilibrage de jeu

(30) Priorität: 16.05.2007 DE 102007023329
(43) Veröffentlichungstag der Anmeldung: 19.11.2008
(73) Patentinhaber: IMS Gear GmbH, 78166 Donaueschingen (DE)
(72) Erfinder: Birker, Stéphane, Virginia Beach, VA 23452 (US); Wöhrle, Michael, 78078 Niedereschach (DE)
(74) Vertreter: Göhring, Robert

(56) Entgegenhaltungen:
- DE-A1- 3 325 248
- DE-A1-102005 001 333
- DE-A1-102006 011 718
- DE-B3-102004 059 538
- DE-C1- 4 414 020

## Beschreibung

Die Erfindung betrifft ein Getriebe gemäß den Merkmalen des Oberbegriffs des Anspruchs 1.

Ein solches Getriebe für eine Kfz-Verstelleinrichtung ist beispielsweise aus DE 10 2006 011 718 A1 bekannt. Das Getriebe weist eine Gewindespindel auf sowie eine auf der Gewindespindel sitzende Spindelmutter. Innerhalb des Getriebegehäuses ist zu beiden Seiten der Spindelmutter je eine Lagerbuchse zur Lagerung der Spindelmutter innerhalb des Getriebegehäuses vorgesehen.

Gemäß DE 10 2004 A 059 538 B3, um eine spielfreie Lagerung der Spindelmutter in dem Gehäuse zu erreichen, wird eine besonders gestaltete Lagerbuchse vorgesehen. Die Lagerbuchse liegt mit ihrem Lagerbund an der Stirnseite der Spindelmutter an. Mit ihrem rohrförmigen Lagerabschnitt ragt jede Lagerbuchse durch eine Durchgangsöffnung des Gehäuses, in dem die Spindelmutter aufgenommen ist. Der rohrförmige Abschnitt der Lagerbuchse ragt aus der Durchgangsöffnung des Getriebegehäuses heraus und stützt sich an einer weiteren Halterung, die z. B. als U-Bügel ausgebildet ist, ab, wobei zwischen der weiteren Halterung und dem Ende des rohrförmigen Lagerabschnitts ein elastisches Element zwischengeschaltet ist. Hierdurch wird die Spindelmutter elastisch beaufschlagt. Die Lagerbuchse ist dabei axial beweglich. Eine derartige Lösung erfordert eine besonders gestaltete Lagerbuchse, die durch die Getriebegehäusewandung hindurchragt. Zudem ist ein weiteres elastisches Bauteil notwendig, das für eine elastische Vorspannung sorgt.

Ein anderes Getriebe für eine Kfz-Sitzverstelleinrichtung ist aus DE 10 2005 001 333 A1 bekannt. Dort ist ebenfalls innerhalb eines Getriebegehäuses eine Spindelmutter, die auf einer Spindel sitzt, zwischen zwei Lagerbuchsen angeordnet. Zur Geräuschreduzierung verfügen diese Lagerbuchsen über einen Führungsabschnitt zur Führung der Spindelmutter und einen Führungsabschnitt zur Führung der Gewindespindel. Hierfür ist beispielsweise der zylinderförmige Lagerabschnitt der Lagerbuchsen mit einem sich ändernden Innendurchmesser ausgestattet.

Die Erfindung hat das Ziel, eine sehr einfache Möglichkeit anzugeben, um eine spielfreie oder weitgehend spielfreie Lagerung der Spindelmutter innerhalb des Getriebegehäuses sicherzustellen, ohne zusätzlich Bauelemente verwenden zu müssen, die außerhalb des Getriebegehäuses sitzen und hierdurch den notwendigen Platzbedarf für ein solches Getriebe erhöhen.

Dieses Ziel wird durch ein Getriebe mit den Merkmalen des Anspruchs 1 gelöst.

Weiterbildungen der Erfindung sind Gegenstand der Unteransprüche.

Die Erfindung wird nachfolgend im Zusammenhang mit 13 Figuren näher erläutert. Es zeigen:
- Figur 1: eine perspektivische Ansicht eines Ausführungsbeispieles des erfindungsgemäßen Getriebes in Explosionsdarstellung,
- Figur 2: ein Gehäuseteil des Getriebes von Figur 1 in perspektivischer Darstellung mit Blick auf die Innenseite des Gehäuseteils,
- Figur 3: eine perspektivische Darstellung des Gehäuseteils von Figur 2 mit Blick auf die Außenseite des Gehäuseteils,
- Figur 4: eine Draufsicht auf das in Figur 2 und Figur 3 dargestellte Gehäuseteil mit Blick auf die Innenseite des Gehäuseteils,
- Figur 5: einen Querschnitt entlang der Linie A-A des Gehäuseteils von Figur 4,
- Figur 6: eine perspektivische Ansicht der in dem Getriebe von Figur 1 verwendeten Lagerbuchse zur Lagerung der Spindelmutter im Getriebegehäuse in perspektivischer Darstellung,
- Figur 7: eine Seitenansicht der Lagerbuchse von Figur 6,
- Figur 8: eine Seitenansicht des zusammengebauten Getriebes von Figur 1,
- Figur 9: eine perspektivische Darstellung des zusammengebauten Getriebes von Figur 8,
- Figur 10: eine Detaildarstellung des zusammengebauten Getriebes von Figur 8 und 9 im Bereich der elastisch verformten Lagerbuchse in Seitenansicht, zur besseren Übersicht ohne detaillierte Darstellung der Spindelmutter,
- Figur 11: eine Detaildarstellung des Getriebes von Figur 10 in Seitenansicht mit noch nicht eingesetzter Spindelmutter und daher nicht deformierter Lagerbuchse,
- Figur 12: einen Längsschnitt durch eine zweite Ausführungsform des erfindungsgemäßen Getriebes und
- Figur 13: einen Längsschnitt durch ein drittes Ausführungsbeispiel des erfindungsgemäßen Getriebes.

In den nachfolgenden Figuren bezeichnen, sofern nichts anderes angegeben ist, gleiche Bezugszeichen gleiche Teile mit gleicher Bedeutung.

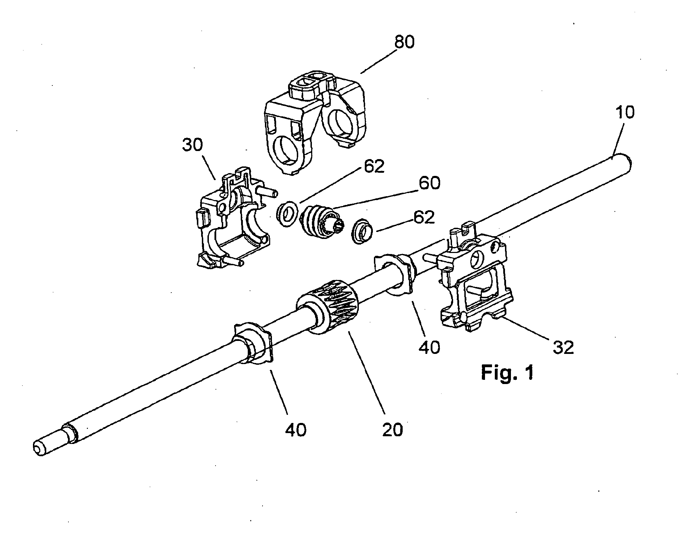

Figur 1 zeigt eine perspektivische Ansicht eines Ausführungsbeispiels des erfindungsgemäßen Getriebes in Explosionsdarstellung. Auf einer Gewindespindel 10 ist eine Spindelmutter 20 angeordnet, die durch eine Antriebsschnecke 60, die durch einen Elektromotor angetrieben werden kann, in Rotation versetzbar ist. Durch eine Rotation der Spindelmutter 20 ist diese in axialer Richtung auf der Gewindespindel 10 bewegbar. Die Spindelmutter 20 und die Antriebsschnecke 60 sind in einem aus zwei Gehäuseteilen 30, 32 zusammengesetzten Gehäuse rotierbar gelagert. Die Lagerung der Spindelmutter 20 erfolgt über Lagerbuchsen 40, die im Gehäuse geeignet angeordnet sind. Ebenso erfolgt die Lagerung der Antriebsschnecke 60 über geeignet angeordnete Lagerbuchsen 62. Figur 1 zeigt des Weiteren eine elastische Ummantelung 80, die das zusammengebaute Gehäuse von oben her umschließt.

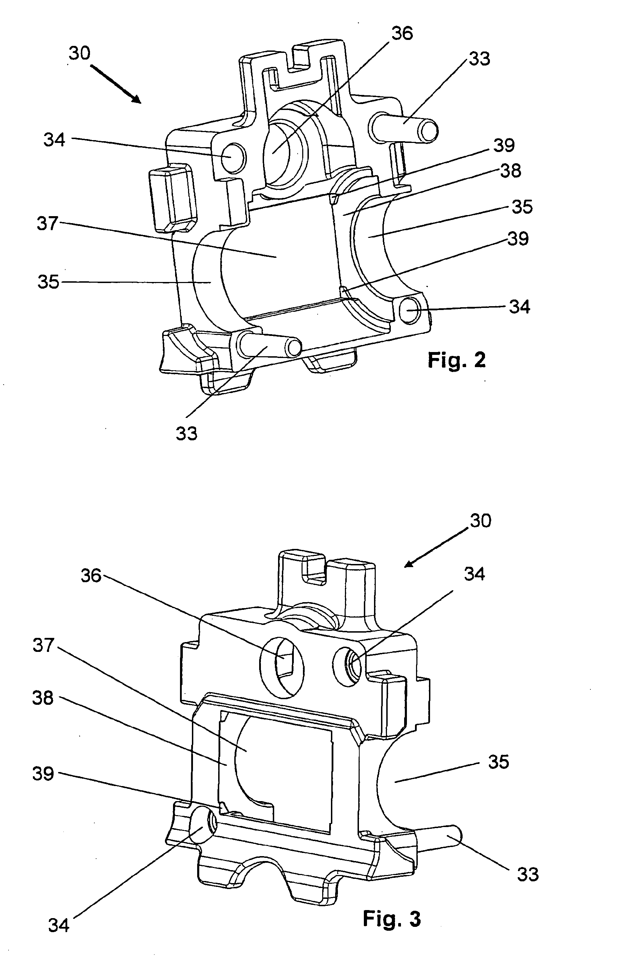

Figur 2 zeigt ein Gehäuseteil 30 des Gehäuses des Getriebes aus Figur 1 in perspektivischer Darstellung mit Blick auf die Innenseite des Gehäuseteils 30. Die Gehäuseteile 30, 32 sind als sogenannte Gleichteile ausgeformt, das bedeutet, dass zum Zusammensetzen eines Gehäuses zwei identische Gehäuseteile 30, 32 verwendet werden. Wie in Figur 2 dargestellt, weist ein Gehäuseteil 30 einen im Wesentlichen rechteckig ausgeformten Querschnitt auf, an dem an zwei diagonal gegenüberliegenden Ecken Stifte 33 angeordnet sind. An den beiden verbleibenden wiederum diagonal gegenüberliegenden Ecken des Gehäuseteils 30 sind Öffnungen 34 angeordnet, in die die Stifte 33 beim Zusammenbau von zwei Gehäuseteilen 30, 32 eingreifen und die Gehäuseteile 30, 32 zueinander ausrichten und verbinden. Im unteren Teil des Gehäuseteils 30 befindet sich eine Aussparung 37 zur Aufnahme der Spindelmutter 20 in axialer Richtung. Die Aussparung 37 ist in axialer Richtung vorder- und rückseitig durch Kontaktflächen 38 begrenzt. Die Kontaktflächen 38 weisen in axialer Richtung eine halbkreisförmige Öffnung 35 auf, durch die im zusammengesetzten Zustand die Gewindespindel 10 geführt wird. Die Kontaktflächen 38 weisen des Weiteren je zwei in etwa dreieckförmige Aufdickungen 39 auf, die auf Höhe der oberen bzw. der unteren Begrenzung der Aussparung 37 und außerhalb eines Durchmessers der Spindelmutter 20 auf die Kontaktflächen 38 aufgebracht sind. Im oberen Bereich weist das Gehäuseteil 30 quer zur Axialrichtung der Spindelmutter eine weitere Öffnung 36 auf, die zur Aufnahme einer Lagerbuchse 62 zur Lagerung der Antriebsschnecke 60 geeignet ausgeformt ist.

Figur 3 zeigt eine perspektivische Darstellung des Gehäuseteils 30 aus Figur 2 mit Blick auf die Außenseite des Gehäuseteils 30. In dieser Ansicht sind die in Figur 2 beschriebenen Stifte 33 und Öffnungen 34 zum Zusammenbau von zwei Gehäuseteilen 30, 32 wieder zu erkennen. Durch die Aussparung 37 zur Aufnahme der Spindelmutter 20 ist auch eine der Kontaktflächen 38 mit den auf die Kontaktfläche 38 aufgebrachten Aufdickungen 39 zu erkennen. Im oberen Teil des Gehäuseteils 30 ist mittig die in Figur 2 beschriebene Öffnung 36 zur Lagerung der Antriebsschnecke 60 angeordnet.

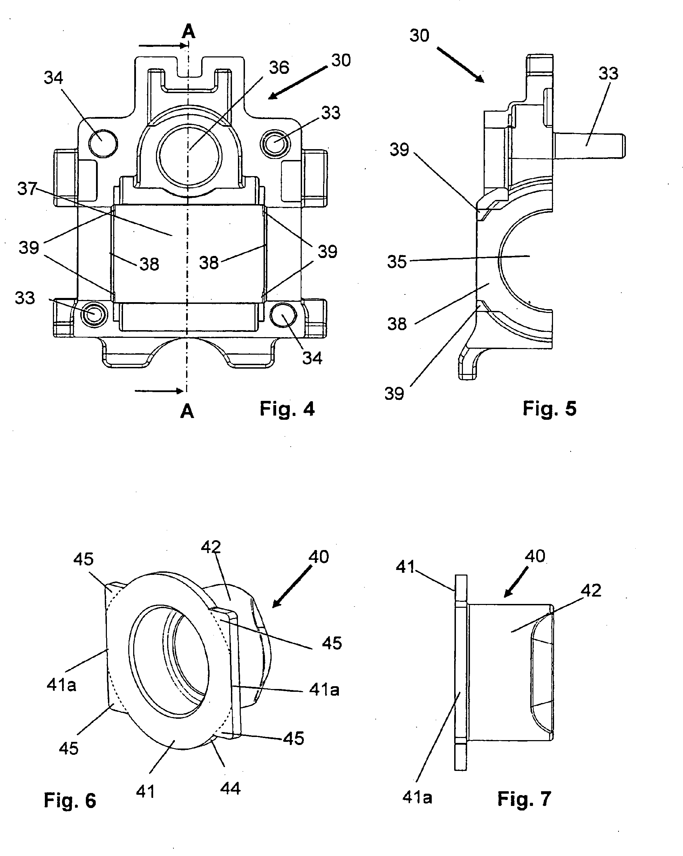

Figur 4 zeigt eine Seitenansicht auf das Gehäuseteil 30 aus den Figuren 2, 3 mit Blick auf die Innenseite des Gehäuseteils 30. Bei der in Figur 4 gezeigten Ansicht ist besonders gut die rechteckige Aussparung 37 zur Aufnahme der Spindelmutter 20 zu erkennen, die in axialer Richtung vorder- und rückseitig durch die Kontaktflächen 38 begrenzt ist. Insbesondere die auf die Kontaktflächen 38 aufgebrachten Aufdickungen 39 sind in dieser Ansicht gut zu erkennen, da sie als Vorsprünge hervortreten.

Figur 5 zeigt einen Querschnitt entlang der Linie A-A des Gehäuseteils 30 von Figur 4. In dieser Darstellung des Gehäuseteils 30 ist die Kontaktfläche 38 mit der halbkreisförmigen Öffnung 35 besonders gut zu erkennen. Ebenfalls gut zu erkennen sind die in Draufsicht annähernd dreieckförmigen Aufdickungen 39, die am äußeren Rand der Kontaktfläche 38, jeweils am oberen und unteren Ende der Aussparung 37 angeordnet sind. Die Aufdickungen 39 sind zur Innenseite des Gehäuses 30 hin mit je einer Fase versehen, so dass ein plattenförmiger Lagerbund 41 der Lagerbuchse 40 beim Zusammensetzen des Getriebes über die Fase hinweg eingeschoben werden kann.

Figur 6 zeigt eine perspektivische Ansicht der in dem Getriebe von Figur 1 verwendeten Lagerbuchse 40 zur Lagerung der Spindelmutter 20 im Getriebegehäuse. Die Lagerbuchse 40 besteht aus einem plattenförmigen Lagerbund 41 und einem an dem plattenförmigen Lagerbund 41 angeordneten rohrförmigen Lagerabschnitt 42. Der plattenförmige Lagerbund 41 ist annähernd kreisförmig ausgebildet und weist außenseitig an den Lagerbund 41 angeordnete annähernd dreieckförmige, überstehende Bereiche 45 auf, die insbesondere über den Durchmesser der Spindelmutter 20 hinausreichen. Der Lagerbund 41 weist des Weiteren eine kreisrunde Öffnung im Bereich des daran einstückig angeformten rohrförmigen Lagerabschnitts 42 auf, so dass der Lagerbund 41 im Wesentlichen als ringförmiger Bereich 44 an einem Ende des rohrförmigen Lagerabschnitts 42 angeordnet ist. Die Lagerbuchse 40 ist derart dimensioniert, dass der plattenförmige Lagerbund 41 im montierten Zustand des Getriebes deckungsgleich mit den Kontaktflächen 38 liegt und die überstehenden Bereiche 45 im Bereich der Aufdickungen 39 angeordnet sind. Der ringförmige Bereich 44 des Lagerbunds 41 ist dabei derart dimensioniert, dass er einen Außendurchmesser aufweist, der dem Außendurchmesser der Spindelmutter entspricht. Wie aus Figur 6 ersichtlich ist, sind die überstehenden Bereiche 45 derart am ringförmigen Bereich 44 des Lagerbunds 42 angeordnet, dass sich zwei Außenkanten 41a ergeben, die zueinander parallel und tangential an dem ringförmigen Bereich 44 angeordnet sind. Die Lagerbuchse 40 ist beispielsweise einstückig aus Kunststoff gefertigt.

Figur 7 zeigt eine Seitenansicht der Lagerbuchse 40 aus Figur 6. Besonders gut zu erkennen ist in dieser Ansicht der plattenförmige Lagerbund 41 und der an diesen Lagerbund angeordnete rohrförmige Lagerabschnitt 42.

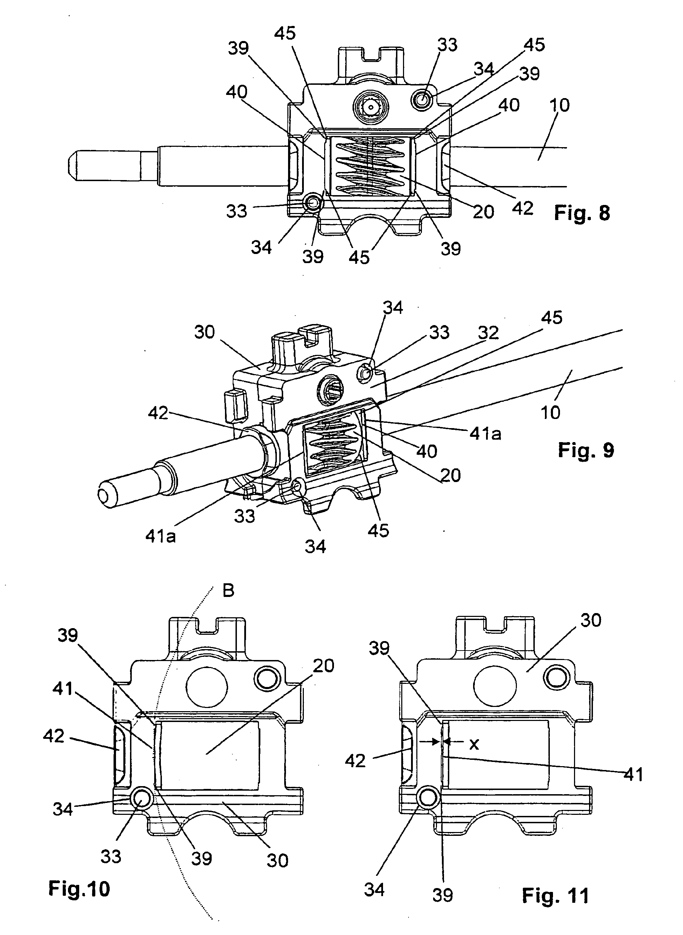

Figur 8 zeigt eine Seitenansicht des zusammengebauten Getriebes aus Figur 1. Die Spindelmutter 20 ist mittels der Lagerbuchsen 40 im Gehäuse 30, 32 gelagert. Die rohrförmigen Lagerabschnitte 42 kommen dabei wie in Figur 9 zu sehen ist in einer aus dem halbkreisförmigen Öffnungen 35 gebildeten kreisförmigen Öffnung des Gehäuses 30, 32 zu liegen. Durch die Lagerbuchse 40 und die Spindelmutter 20 ist die Gewindespindel 10 geführt. In der Ansicht aus Figur 8 ist besonders deutlich zu erkennen, dass die überstehenden Bereiche 45 im zusammengebauten Zustand des Getriebes derart angeordnet sind, dass sie in der Aussparung 37 in Axialrichtung auf den Aufdickungen 39 sitzen. Wie in Figur 9 besonders gut zu erkennen ist, schließen die Außenkanten 41a des Lagerbunds 41 außenseitig bündig mit den Gehäuseteilen 30, 32 ab.

Figur 10 zeigt eine Darstellung des zusammengebauten Getriebes aus Figuren 8 und 9 im Bereich der elastisch verformten Lagerbuchse 40 in Seitenansicht. In dieser Seitenansicht des zusammengebauten Getriebes ist es besonders gut zu erkennen, dass der plattenförmige Lagerbund 41 im fertig montierten Getriebe unter Vorspannung steht und entlang einer Biegelinie B verläuft. Die Vorspannung des Lagerbunds 41 wird dadurch erreicht, dass die Kontaktflächen 38 in einem Abstand zueinander angeordnet sind, der der Summe aus der Länge der Spindelmutter 20 und zwei mal der Dicke des plattenförmigen Lagerbundes 41 entspricht. Dadurch dass die überstehenden Bereiche 45 auf den Aufdickungen 39 zu liegen kommen, entsteht eine Vorspannung des plattenförmigen Lagerbunds 41, die ein Spiel der Lagerung der Spindelmutter 20 verhindert.

In Figur 11 ist das Getriebe aus Figur 10 mit noch nicht eingesetzter Spindelmutter 20 dargestellt. Wird die Lagerbuchse 40 in entspanntem Zustand in das Getriebegehäuse 30, 32 eingesetzt, so kommt der Lagerbund 41 mit seinen überstehenden Bereichen 45 auf den Aufdickungen 39 zu liegen. Zwischen dem ringförmigen Bereich 44 des Lagerbunds 41 und der Kontaktfläche 38 bleibt ein Spalt in Höhe der Aufdickungen 39 bestehen, der den möglichen Federweg X der Lagerbuchse 40 definiert. Durch das Einbringen der Spindelmutter 20 wird der Lagerbund 41 zwischen den Aufdickungen 39 auf die Kontaktfläche 38 gedrückt und so gemäß der oben angesprochenen Biegelinie B vorgespannt. An dieser Stelle ist anzumerken, dass die Erfindung nicht darauf beschränkt ist, dass die Aufdickungen 39 am Gehäuse angeordnet sind. Es ist beispielsweise auch möglich, die Aufdickungen 39 direkt an den überstehenden Bereichen 45 des Laberbundes 41 vorzusehen.

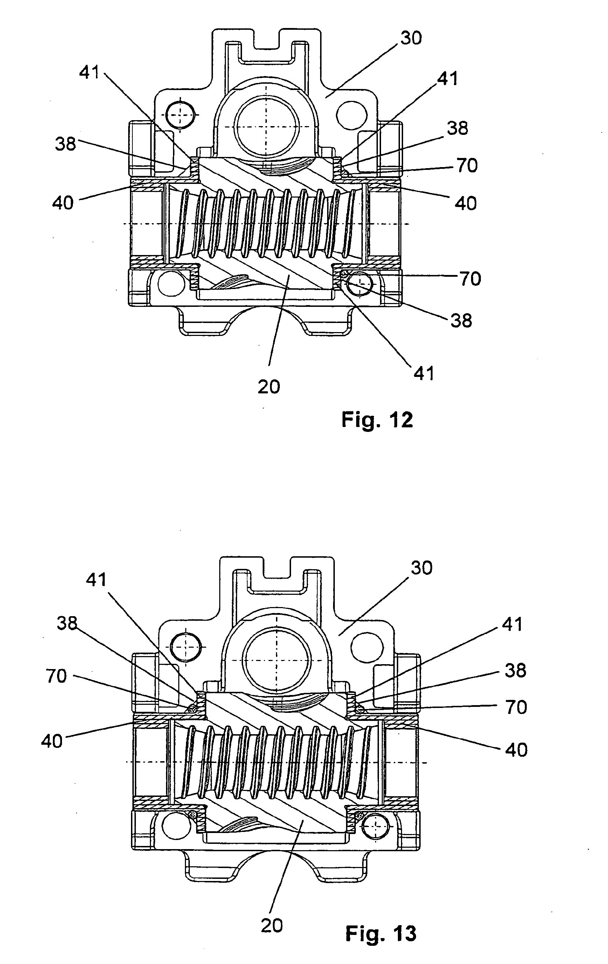

Figur 12 zeigt einen Längsschnitt einer weiteren Ausführungsform des erfindungsgemäßen Getriebes. In dieser Ausführungsform wird eine Vorspannung der Lagerbuchse 40 nicht durch Aufdickungen 39, sondern durch einen Spannring 70 erreicht, der zwischen der Lagerbuchse 40 und der Kontaktfläche 38 angeordnet ist. Durch ein Anschrägen der Kontaktflächen 38 wird bewirkt, dass der Spannring 70 in optimaler Position zur Lagerbuchse 40 zu liegen kommt, und es wird eine Kraftwirkung sowohl in axialer als auch in radialer Richtung der Lagerbuchse 40 erzielt. Der weitere Aufbau des Getriebes entspricht dem des oben beschriebenen Ausführungsbeispiels und wird daher nicht weiter ausgeführt.

Figur 13 zeigt das Getriebe aus Figur 12, wobei an den Lagerbuchsen 40 zu beiden Seiten der Spindelmutter 20 ein Spannring 70 vorgesehen ist.

### Bezugszeichenliste

- 10: Gewindespindel
- 20: Spindelmutter
- 30: Gehäuseteil
- 32: Gehäuseteil
- 33: Stift
- 34: Öffnung
- 35: Öffnung
- 36: Öffnung
- 37: Aussparung
- 38: Kontaktfläche
- 39: Aufdickung
- 40: Lagerbuchse
- 41: plattenförmiger Lagerbund
- 41a: Außenkante
- 42: rohrförmiger Lagerabschnitt
- 44: ringförmiger Bereich
- 45: überstehender Bereich
- 60: Antriebsschnecke
- 62: Lagerbuchse
- 70: Spannring
- 80: elastische Ummantelung

- B: Biegelinie
- X: Federweg

## Patentansprüche

1. Getriebe für eine Verstelleinrichtung, insbesondere eine Kfz-Verstelleinrichtung, mit einer Gewindespindel (10) sowie mit einer auf der Gewindespindel (10) sitzenden Spindelmutter (20), wobei die Spindelmutter (20) in Rotation Versetzbar ist und wobei innerhalb eines Getriebegehäuses (30, 32) zu beiden Seiten der Spindelmutter (20) je eine Lagerbuchsen (40) zur Lagerung der Spindelmutter (20) innerhalb des Getriebegehäuses (30, 32) vorgesehen ist, wobei mindestens eine der Lagerbuchsen (40) mit einem plattenförmigen Lagerbund (41) versehen ist, welcher mindestens einen überstehenden Bereich (45) aufweist, der sich über den Durchmesser der Spindelmutter (20) hinauserstreckt und wobei mindestens eine der Lagerbuchsen (40) aus flexiblem Material besteht und unter axialer Vorspannung zwischen Getriebegehäuse (30, 32) und Spindelmutter (20) eingeklemmt sitzt,
**dadurch gekennzeichnet, dass** die Vorspannung durch axial zwischen dem Getriebegehäuse (30, 32) und der mindestens einen Lagerbuchse (40) und radial außerhalb des Durchmessers der Spindelmutter angeordnete Elemente verursacht ist.

2. Getriebe nach Anspruch 1,
**dadurch gekennzeichnet, dass** mindestens eine der Lagerbuchsen (40) aus Kunststoff besteht.

3. Getriebe nach einem der Ansprüche 1 oder 2,
**dadurch gekennzeichnet, dass** der überstehende Bereich (45) des plattenförmigen Lagerbundes (41) der Lagerbuchse (40) vier voneinander beabstandete und etwa annähernd dreieckförmige Abschnitte aufweist.

4. Getriebe nach einem der Ansprüche 1 bis 3,
**dadurch gekennzeichnet, dass** das Getriebegehäuse (30, 32) Gehäuseteile aufweist, welche mit Kontaktflächen (38) zur Anlage des plattenförmigen Lagerbundes (41) der Lagerbuchse (40) versehen sind.

5. Getriebe nach Anspruch 4,
**dadurch gekennzeichnet, dass** in den Kontaktflächen (38) der Gehäuseteile (30, 32) des Getriebegehäuses (30) Aufdickungen (39) als die Vorspannung verursachende Elemente aufgebracht sind.

6. Getriebe nach Anspruch 5,
**dadurch gekennzeichnet, dass** die Aufdickungen (39) ausschließlich an den überstehenden Bereichen (45) der Lagerbuchse (40) angreifen.

7. Getriebe nach einem der Ansprüche 5 oder 6,
**dadurch gekennzeichnet, dass** die Aufdickungen (39) angefast sind.

8. Getriebe nach einem der Ansprüche 1 oder 2,
**dadurch gekennzeichnet, dass** die die Vorspannung verursachenden Elemente als Aufdickungen an den überstehenden Bereichen (45) des Lagerbundes (41) angeordnet sind.

9. Getriebe nach einem der Ansprüche 1 bis 8,
**dadurch gekennzeichnet, dass** der plattenförmige Lagerbund (41) der Lagerbuchse (40) im montierten Zustand des Getriebes von der Seite des Getriebes her betrachtet unter Vorspannung bogenförmig innerhalb des Getriebegehäuses (30, 32) sitzt.

10. Getriebe nach einem der Ansprüche 1, 2 oder 9,
**dadurch gekennzeichnet, dass** die die Vorspannung verursachenden Elemente zwischen Kontaktfläche (38) und plattenförmigen Lagerbund (41) der Lagerbuchse (40) als ein weiteres Bauteil angeordnet sind, das die überstehenden Bereiche (45) der Lagerbuchse (40) in Richtung Spindelmutter (20) drückt.

11. Getriebe nach Anspruch 10,
**dadurch gekennzeichnet, dass** das weitere Bauteil ein Ring (70) ist.

12. Getriebe nach einem der Ansprüche 1 bis 11,
**dadurch gekennzeichnet, dass** das Gehäuse des Getriebes aus Zinkdruckguss gebildet ist.

13. Getriebe nach einem der Ansprüche 1 bis 12,
**dadurch gekennzeichnet, dass** um das Getriebegehäuse herum eine elastische Ummantelung (80) sitzt.

14. Getriebe nach einem der Ansprüche 1 bis 13,
**dadurch gekennzeichnet, dass** die Lagerbuchse (40) einen Lagerbund (41) mit zwei parallelen und gerade verlaufenden Außenkanten (41a) aufweist.

15. Getriebe nach Anspruch 14,
**dadurch gekennzeichnet, dass** die Außenkanten (41a) parallel zu einer Außenwand des Getriebegehäuses (32) angeordnet sind.

16. Getriebe nach einem der Ansprüche 1 bis 15,
**dadurch gekennzeichnet, dass** das Getriebegehäuse (30, 32) aus zwei als Gleichteile ausgeführten Gehäuseteilen (30, 32) besteht.

## Claims

1. A gear mechanism for an adjustment device, in particular a motor-vehicle adjustment device, with a threaded spindle (10) and with a spindle nut (20) mounted on the threaded spindle (10), wherein the spindle nut (20) is capable of being set in rotation and wherein inside a gear-mechanism housing (30, 32) one bearing bush (40) for mounting the spindle nut (20) is provided in each case on both sides of the spindle nut (20) inside the gear-mechanism housing (30, 32), wherein at least one of the bearing bushes (40) is provided with a plate-shaped bearing collar (41) which has at least one projecting region (45) which extends over the diameter of the spindle nut (20) and wherein at least one of the bearing bushes (40) consists of flexible material and is mounted clamped with axial pre-stressing between the gear-mechanism housing (30, 32) and the spindle nut (20), **characterized in that** the pre-stressing is produced by elements arranged axially between the gear-mechanism housing (30, 32) and the at least one bearing bush (40) and radially outside the diameter of the spindle nut.

2. A gear mechanism according to claim 1, **characterized in that** at least one of the bearing bushes (40) consists of plastics material.

3. A gear mechanism according to one of claims 1 or 2, **characterized in that** the projecting region (45) of the plate-shaped bearing collar (41) of the bearing bush (40) has four portions which are spaced from one another and which are substantially triangular for example.

4. A gear mechanism according to any one of claims 1 to 3, **characterized in that** the gear-mechanism housing (30, 32) has housing parts which are provided with contact faces (38) for the abutment of the plate-shaped bearing collar (41) of the bearing bush (40).

5. A gear mechanism according to claim 4, **characterized in that** thickened portions (39) are attached as elements producing the pre-stressing in the contact faces (38) of the housing parts (30, 32) of the gear-mechanism housing (30).

6. A gear mechanism according to claim 5, **characterized in that** the thickened portions (39) engage exclusively on the projecting regions (45) of the bearing bush (40).

7. A gear mechanism according to one of claims 5 or 6, **characterized in that** the thickened portions (39) are bevelled.

8. A gear mechanism according to one of claims 1 or 2, **characterized in that** the elements producing the pre-stressing are arranged as thickened portions on the projecting regions (45) of the bearing collar (41).

9. A gear mechanism according to any one of claims 1 to 8, **characterized in that** in the mounted state of the gear mechanism the plate-shaped bearing collar (41) of the bearing bush (40) is mounted in an arched manner with pre-stressing inside the gear-mechanism housing (30, 32) as viewed from the side of the gear mechanism.

10. A gear mechanism according to any one of claims 1, 2 or 9, **characterized in that** the elements producing the pre-stressing are arranged between the contact face (38) and the plate-shaped bearing collar (41) of the bearing bush (40) as a further component which presses the projecting regions (45) of the bearing bush (40) in the direction of the spindle nut (20).

11. A gear mechanism according to claim 10, **characterized in that** the further component is a ring (70).

12. A gear mechanism according to any one of claims 1 to 11, **characterized in that** the housing of the gear mechanism is formed from die-cast zinc.

13. A gear mechanism according to any one of claims 1 to 12, **characterized in that** a resilient sheathing (80) is provided around the gear-mechanism housing.

14. A gear mechanism according to any one of claims 1 to 13, **characterized in that** the bearing bush (40) has a bearing collar (41) with two outer edges (41a) which are parallel and extend straight.

15. A gear mechanism according to claim 14, **characterized in that** the outer edges (41a) are arranged parallel to an outer wall of the gear-mechanism housing (32).

16. A gear mechanism according to any one of claims 1 to 15, **characterized in that** the gear-mechanism housing (30, 32) comprises two housing parts (30, 32) which are designed as identical parts.

## Revendications

1. Transmission pour une installation d'actionnement, notamment d'une installation d'actionnement de véhicule automobile comportant une broche filetée (10) ainsi qu'un écrou à broche (20) installé sur la broche filetée (10),
- l'écrou (20) étant mis en rotation,
- un boîtier de transmission (30, 32), comporte des deux côtés de l'écrou à broche (20), un coussinet respectif (40) pour recevoir l'écrou (20),
- au moins l'un des coussinets (40) comporte un collet de palier (41) en forme de plaque, ayant au moins une zone (45) en saillie qui dépasse du diamètre de l'écrou à broche (20), et
- au moins l'un des coussinets (40) est en une matière souple et est monté serré avec une précontrainte axiale entre le boîtier de transmission (30, 32) et l'écrou à broche (20),
transmission **caractérisée en ce que**
la précontrainte est générée par des éléments installés axialement entre le boîtier de transmission (30, 32) et au moins l'un des coussinets (40) et ces éléments sont situés radialement au-delà du diamètre de l'écrou à broche.

2. Transmission selon la revendication 1,
**caractérisée en ce qu'**
au moins l'un des coussinets (40) est en matière plastique.

3. Transmission selon la revendication 1 ou 2,
**caractérisée en ce que**
la zone en saillie (45) du collet (41) en forme de plaque du coussinet (40), comporte quatre segments de forme sensiblement triangulaire, écartés les uns des autres.

4. Transmission selon l'une des revendications 1 à 3,
**caractérisée en ce que**
le boîtier de transmission (30, 32) comporte des parties de boîtier munies de surfaces de contact (38) pour recevoir le collet (41) en forme de plaque du coussinet (40).

5. Transmission selon la revendication 4,
**caractérisée en ce que**
les surfaces de contact (38) des parties (30, 32) du boîtier de transmission (30), comportent des épaississements (39) constituant des éléments générant la précontrainte.

6. Transmission selon la revendication 5,
**caractérisée en ce que**
les épaississements (39) agissent exclusivement sur les zones en saillie (45) du coussinet (40).

7. Transmission selon la revendication 5 ou 6,
**caractérisée en ce que**
les épaississements (39) ont des congés.

8. Transmission selon la revendication 1 ou 2,
**caractérisée en ce que**
les éléments générant la précontrainte sont des épaississements prévus sur les zones en saillie (45) du collet (41).

9. Transmission selon l'une des revendications 1 à 8,
**caractérisée en ce que**
le collet (41) en forme de plaque du coussinet (40), à l'état monté de la transmission, est placé sous précontrainte suivant une forme courbe dans le boîtier de transmission (30, 32) en vue de côté.

10. Transmission selon l'une des revendications 1, 2 ou 9,
**caractérisée en ce que**
les éléments générant la précontrainte sont sous la forme d'un autre composant installé entre la surface de contact (38) et le collet en forme de plaque (41) du coussinet (40), cet autre composant poussant les zones en saillie (45) du coussinet (40) en direction de l'écrou à broche (20).

11. Transmission selon la revendication 10,
**caractérisée en ce que**
l'autre composant est un anneau (70).

12. Transmission selon l'une des revendications 1 à 11,
**caractérisée en ce que**
le boîtier de la transmission est en fonte de zinc sous pression.

13. Transmission selon l'une des revendications 1 à 12,
**caractérisée par**
une enveloppe élastique (80) autour du boîtier de transmission.

14. Transmission selon l'une des revendications 1 à 13,
**caractérisée en ce que**
le coussinet (40) comporte un collet (41) ayant deux arêtes extérieures (41a), droites, parallèles.

15. Transmission selon la revendication 14,
**caractérisée en ce que**
les arêtes extérieures (41a) sont parallèles à la paroi extérieure du boîtier de transmission (32).

16. Transmission selon l'une des revendications 1 à 15,
**caractérisée en ce que**
le boîtier de transmission (30, 32) se compose de deux parties de boîtier (30, 32) réalisées de manière identique.
